# EUROPÄISCHE PATENTANMELDUNG

(11) **EP 3 335 553 A1**
(43) Veröffentlichungstag der Anmeldung: **20.06.2018**
(21) Anmeldenummer: 16203795.6
(22) Anmeldetag: 13.12.2016
(51) Int. Cl.: A01M 7/00, B05B 9/06, B05B 9/08

(54) **SPRÜHGERÄT**

(71) Anmelder: Bayer CropScience AG, 40789 Monheim am Rhein (DE)
(72) Erfinder: Die Erfindernennung liegt noch nicht vor
(74) Vertreter: BIP Patents

(57) **Zusammenfassung**

Die vorliegende Erfindung betrifft eine Vorrichtung und ein Verfahren zur Applikation eines Sprühmittels mit Hilfe eines tragbaren Sprühgeräts.

## Beschreibung

Die vorliegende Erfindung betrifft eine Vorrichtung und ein Verfahren zur Applikation eines Sprühmittels mit Hilfe eines tragbaren Sprühgeräts.

Tragbare Sprühgeräte sind im Stand der Technik beschrieben. Insbesondere in der Landwirtschaft werden tragbare Sprühgeräte eingesetzt, um Pflanzenschutzmittel zu applizieren. Viele Kleinbauern verwenden einfache Geräte, die über einen Behälter zur Aufnahme des Sprühmittels und einen Düsenkörper, über den das Sprühmittel verteilt werden kann, verfügen. Mittels einer handbetriebenen Pumpe wird das Sprühmittel aus dem Behälter durch den Düsenkörper befördert, während der Nutzer durch das Zielgebiet schreitet. Die Auftragsmenge ist abhängig von der Schrittgeschwindigkeit, der Sprühbreite und der pro Zeiteinheit geförderten Menge an Sprühmittel. Da die genannten Parameter während eines Applikationsvorgangs üblicherweise variieren (der Mensch ist keine Maschine), ist die Auftragsmenge über das Zielgebiet ungleichmäßig. Das kann zur Folge haben, dass zu wenig oder zu viel appliziert wird ist. Eine zu geringe Applikationsmenge kann Unwirksamkeit des Sprühmittels zur Folge haben. Eine zu große Menge kann unnötige Kosten oder sogar Schäden verursachen.

Ziel der vorliegenden Erfindung ist es, ein Sprühgerät zur Verfügung zu stellen, mit dem eine konstante und gleichbleibende Auftragsmenge gewährleistet werden kann, wobei das Sprühgerät kostengünstig in der Herstellung und im Betrieb und einfach in der Handhabung sein sollte, und insbesondere für Kleinbauern geeignet sein sollte.

Erfindungsgemäß wird diese Aufgabe durch die Gegenstände der unabhängigen Ansprüche gelöst. Bevorzugte Ausführungsformen finden sich in den abhängigen Ansprüchen sowie in der vorliegenden Beschreibung.

Ein erster Gegenstand der vorliegenden Erfindung ist somit ein System umfassend
- einen Behälter zur Aufnahme eines Sprühmittels
- Mittel zum Tragen des Behälters durch einen Nutzer
- mindestens eine Düse zur Applikation des Sprühmittels auf ein Zielobjekt
- Mittel zum Fördern des Sprühmittels aus dem Behälter durch die mindestens eine Düse in Richtung des Zielobjekts
- einen Flussmesser zum Bestimmen des Sprühmittelflusses
- einen Abstandssensor zur Ermittlung des Sprühabstandes zwischen der mindestens einen Düse und dem Zielgebiet
- Mittel zur Bestimmung der Schrittgeschwindigkeit des Nutzers
- einen oder mehrere Signalgeber
- eine Computereinheit zur Erfassung und Auswertung des Sprühmittelflusses, der Schrittgeschwindigkeit und des Sprühabstandes und zur Steuerung eines oder mehrerer Signalgeber, wobei die Computereinheit so konfiguriert ist, dass sie den einen oder die mehreren Signalgeber veranlasst, dem Nutzer ein oder mehrere Signale zu geben, wenn ein oder mehrere Applikationsparameter von vordefinierten Werten abweichen.

Ein weiterer Gegenstand der vorliegenden Erfindung ist ein tragbares Sprühgerät umfassend
- Mittel zum Tragen des Sprühgeräts durch einen Nutzer
- einen Behälter zur Aufnahme eines Sprühmittels
- mindestens eine Düse zur Applikation des Sprühmittels auf ein Zielobjekt
- Mittel zum Fördern des Sprühmittels aus dem Behälter durch die mindestens eine Düse in Richtung des Zielobjekt
- einen Flussmesser zum Bestimmen des Sprühmittelflusses
- einen Abstandssensor zur Ermittlung des Sprühabstandes zwischen der mindestens einen Düse und dem Zielobjekt
- einen oder mehrere Signalgeber
wobei das Sprühgerät so hergerichtet ist, dass es mit einem mobilen Computersystem in der Weise zusammenwirkt, dass es den Sprühmittelfluss, und den Sprühabstand an das Computersystem übermittelt und das Computersystem den einen oder mehreren Signalgeber veranlasst, dem Nutzer ein oder mehrere Signale zu geben, wenn der Sprühmittelfluss und/oder der Sprühabstand von vordefinierten Werten abweichen.

Ein weiterer Gegenstand der vorliegenden Erfindung ist ein Verfahren zur Applikation eines Sprühmittels auf ein Zielobjekt umfassend die Schritte
- Bewegen eines tragbaren Sprühgeräts enthaltend das Sprühmittel durch ein Zielgebiet durch einen Nutzer, der das Zielgebiet durchschreitet
- Richten mindestens einer Düse auf ein Zielobjekt
- Fördern des Sprühmittels aus dem Sprühgerät durch die mindestens eine Düse auf das Zielobjekt
- Bestimmen des Sprühabstandes zwischen der mindestens einen Düse und dem Zielobjekt
- Bestimmen der Schrittgeschwindigkeit des Nutzers
- Bestimmen des Sprühmittelflusses
- Erzeugen eines oder mehrerer Signale für den Fall, dass ein oder mehrere Applikationsparameter von vordefinierten Werten abweichen.

Ein weiterer Gegenstand der vorliegenden Erfindung ist ein Verfahren zum Kalibrieren eines tragbaren Sprühgeräts umfassend die Schritte
- Bewegen des Sprühgeräts über ein Zielobjekt
- Richten mindestens einer Düse auf das Zielobjekt in einem definierten Sprühabstand zwischen der mindestens einen Düse und dem Zielobjekt
- Fördern eines Sprühmittels aus dem Sprühgerät durch die mindestens eine Düse auf das Zielgebiet
- Bestimmen der Bewegungsgeschwindigkeit
- Bestimmen des Sprühmittelflusses
- Bestimmen der Sprühbreite durch Ausmessen der Breite des besprühten Zielobjekts.

Die Erfindung wird nachstehend näher erläutert, ohne zwischen den Erfindungsgegenständen (System, Sprühgerät, Verfahren) zu unterscheiden. Die nachfolgenden Erläuterungen sollen vielmehr für alle Erfindungsgegenstände in analoger Weise gelten, unabhängig davon, in welchem Kontext (System, Sprühgerät, Verfahren) sie erfolgen.

Das erfindungsgemäße System und das erfindungsgemäße Sprühgerät dienen der Applikation eines oder mehrerer Sprühmittel durch einen Nutzer.

Das Sprühmittel ist eine Flüssigkeit, die mit dem Sprühgerät auf ein Zielobjekt appliziert wird oder appliziert werden soll.

Der Begriff Flüssigkeit soll breit verstanden werden; er soll beispielsweise neben Reinstoffen und Lösungen auch Suspensionen und Emulsionen erfassen.

Vorzugsweise enthält das Sprühmittel ein oder mehrere Pflanzenschutzmittel und/oder einen oder mehrere Nährstoffe.

Unter dem Begriff "Pflanzenschutzmittel" wird ein Mittel verstanden, das dazu dient, Pflanzen oder Pflanzenerzeugnisse vor Schadorganismen zu schützen oder deren Einwirkung vorzubeugen, unerwünschte Pflanzen oder Pflanzenteile zu vernichten, ein unerwünschtes Wachstum von Pflanzen zu hemmen oder einem solchen Wachstum vorzubeugen, und/oder in einer anderen Weise als Nährstoffe die Lebensvorgänge von Pflanzen zu beeinflussen (z.B. Wachstumsregler).

Beispiele für Pflanzenschutzmittelgruppen sind Herbizide, Fungizide, Insektizide und Wachstumsregler.

Ein Pflanzenschutzmittel enthält üblicherweise einen Wirkstoff oder mehrere Wirkstoffe. Als "Wirkstoffe" werden Substanzen bezeichnet, die in einem Organismus eine spezifische Wirkung haben und eine spezifische Reaktion hervorrufen. Üblicherweise enthält ein Pflanzenschutzmittel einen Trägerstoff zum Verdünnen des einen oder der mehreren Wirkstoffe. Daneben sind Additive wie Konservierungsmittel, Puffer, Farbstoffe und dergleichen denkbar.

Wachstumsregler dienen zum Beispiel der Erhöhung der Standfestigkeit bei Getreide durch Verkürzung der Halmlänge (Halmverkürzer oder besser Internodienverkürzer), Verbesserung der Bewurzelung von Stecklingen, Verringerung der Pflanzenhöhe durch Stauchung im Gartenbau oder der Verhinderung der Keimung von Kartoffeln. Es sind üblicherweise Phytohormone oder deren synthetischen Analoge.

Unter dem Begriff "Nährstoffe" werden diejenigen anorganischen und organischen Verbindungen verstanden, denen Pflanzen die Elemente entnehmen können, aus denen ihre Körper aufgebaut sind. Als Nährstoffe werden oft auch diese Elemente selbst bezeichnet. Je nach dem Standort der Pflanze werden die Nährstoffe aus der Luft, dem Wasser und dem Boden entnommen. Dabei handelt es sich meistens um einfache anorganische Verbindungen wie Wasser (H₂O) und Kohlendioxid (CO₂) sowie Ionen wie Nitrat (NO₃⁻), Phosphat (PO₄³⁻) und Kalium (K⁺). Die Verfügbarkeit der Nährstoffe ist unterschiedlich. Sie hängt vom chemischen Verhalten des Nährstoffs und von den Standortbedingungen ab. Da die Nährstoff-Elemente in einem bestimmten Mengenverhältnis benötigt werden, begrenzt meist die Verfügbarkeit eines Elementes das Wachstum der Pflanzen (Minimumgesetz ausführend beschrieben durch Justus von Liebig). Führt man dieses Element zu, steigert sich das Wachstum. Lebensnotwendig sind neben den Kernelementen der organischen Substanz (C, O, H, N und P) noch K, S, Ca, Mg, Mo, Cu, Zn, Fe, B, Mn, Cl bei höheren Pflanzen, Co, Ni. Für die einzelnen Nährstoffe können verschiedene Verbindungen vorliegen, so kann beispielsweise Stickstoff als Nitrat, Ammonium oder Aminosäure zugeführt werden.

Das Zielobjekt ist derjenige Gegenstand, der mit Sprühmittel besprüht wird oder besprüht werden soll. Dabei kann es sich um eine oder mehrere Pflanzen, einen oder mehrere Bereiche eines Feldes (z.B. der Ackerboden), um Wände, Wege, Straßen, Schienen oder andere Objekte handeln.

In einer bevorzugten Ausführungsform handelt es sich bei dem Zielobjekt um Kulturpflanzen, die in einem Feld angebaut werden.

Unter dem Begriff "Kulturpflanze" wird eine Pflanze verstanden, die durch das Eingreifen der Menschen zielgerichtet als Nutz- oder Zierpflanze angebaut wird.

Unter dem Begriff "Feld" wird ein räumlich abgrenzbarer Bereich der Erdoberfläche verstanden, der landwirtschaftlich genutzt wird, indem auf einem solchen Feld Kulturpflanzen angepflanzt, mit Nährstoffen versorgt und geerntet werden.

Erfindungsgemäß bewegt sich ein Nutzer mit einem Sprühgerät durch ein Zielgebiet (z.B. ein Feld für Kulturpflanzen) und appliziert dabei Sprühmittel auf ein oder mehrere Zielobjekte in dem Zielgebiet.

Das erfindungsgemäße Sprühgerät umfasst mindestens einen Behälter zur Aufnahme eines Sprühmittels. Der Behälter dient zur Aufnahme, Lagerung und/oder zum Transport des Sprühmittels zum Zielgebiet und/oder durch das Zielgebiet.

Es ist denkbar, dass das Sprühgerät zur Applikation von mehreren Sprühmitteln gleichzeitig und/oder nacheinander hergerichtet ist. Es ist denkbar, dass das Sprühmittel aus zwei oder mehr Komponenten besteht, die während eines Sprühvorgangs in dem Sprühgerät und/oder in der mindestens einen Düse zusammengeführt werden. Es ist zum Beispiel denkbar, dass es sich bei einer Komponente um ein Konzentrat (wie beispielsweise ein Pflanzenschutzmittelkonzentrat) und bei einer anderen Komponente um ein Verdünnungsmittel (wie beispielsweise Wasser) handelt.

Es ist denkbar, dass das Sprühgerät mehrere Behälter umfasst. Ferner ist denkbar, dass das Sprühgerät einen Behälter zur Aufnahme eines ersten Sprühmittels (z.B. eines Verdünnungsmittels) umfasst und zusätzlich Mittel zum Anschluss eines zweiten Behälters mit einem zweiten Sprühmittel (z.B. einem Pflanzenschutzmittelkonzentrat) umfasst.

Der Behälter ist vorzugsweise druckfest ausgeführt, so dass der Behälter einem Überdruck (gegenüber dem Atmosphärendruck) ausgesetzt werden kann. Der Überdruck kann beispielsweise genutzt werden, um das Sprühmittel aus dem Behälter zu fördern.

Der Behälter besteht aus einem oder mehreren Materialien, die von dem Sprühmittel nicht angegriffen werden. Vorzugsweise ist der Behälter zumindest teilweise aus Kunststoff ausgeführt. Kunststoffe sind dafür bekannt, dass sie vielen Stoffen gegenüber chemisch inert sind. Sie sind zudem leicht, lassen sich gut verarbeiten und in nahezu beliebige Formen bringen.

In einer bevorzugten Ausführungsform handelt es sich bei dem Behälter um einen druckfesten Kanister aus Kunststoff, der eine reversibel verschließbare Öffnung umfasst, über die ein Sprühmittel in den Behälter eingefüllt werden kann.

Das erfindungsgemäße Sprühgerät ist ein tragbares Sprühgerät. Es wird von einem Nutzer durch ein Zielgebiet transportiert. Dazu weist das Sprühgerät Mittel zum Tragen auf. Vorzugsweise wird zumindest der Behälter des Sprühgeräts auf dem Rücken getragen. Daher weist das Sprühgerät vorzugsweise Riemen und oder Gurte auf, mit denen der Behälter auf den Rücken geschnallt werden kann. Das Tragen auf dem Rücken hat unter anderem den Vorteil, dass der Nutzer seine Hände für andere Dinge als das Tragen des Behälters verwenden kann.

Das erfindungsgemäße Sprühgerät umfasst ferner eine oder mehrere Düsen, über die das Sprühmittel aus dem Sprühgerät auf ein Zielobjekt abgegeben wird.

Über die Düse kann eine gewünschte räumliche Verteilung des applizierten Sprühmittels erreicht werden. Üblicherweise verwandelt die Sprühdüse die Flüssigkeit, die durch sie hindurchtritt, in Tropfen mit einer spezifischen Tropfengrößenverteilung, die unter anderem vom Druck der Flüssigkeit, von der Fließgeschwindigkeit der Flüssigkeit und der Geometrie der Düse abhängt. Vorzugsweise ist die Düse austauschbar, so dass ein Anwender eine an die Applikation und das Zielobjekt angepasste Düse mit einer gewünschten Tropfengrößenverteilung und räumlichen Verteilung des Sprühmittels auswählen kann.

Die mindestens eine Düse ist an einen Düsenkörper angebracht, der vom Nutzer vorzugsweise in einer Hand gehalten werden kann. Der Düsenkörper kann beispielsweise lanzenförmig oder pistolenförmig sein oder ein andere Form aufweisen. Er ist vorzugsweise so ausgeführt, dass der Nutzer die mindestens eine Düse auf ein Zielobjekt richten und Sprühmittel auf das Zielobjekt applizieren kann.

Vorzugsweise umfasst der Düsenkörper eine Querstange, die sich quer zur Bewegungsrichtung des Nutzers beim Applizieren des Sprühmittels erstreckt und die mehrere Düsen, vorzugsweise zwei, drei oder vier Düsen umfasst, die über die Länge der Querstange verteilt sind. Ebenso ist es denkbar, dass der Düsenkörper die Form einer Gabel besitzt, wobei an den Enden des Düsenkörpers, die den Gabelspitzen entsprechen, Düsen angebracht sind. Weitere Formen sind denkbar.

Das erfindungsgemäße Sprühgerät umfasst ferner Mittel zum Fördern des Sprühmittels aus dem Behälter durch die mindestens eine Düse in Richtung Zielobjekt. Vorzugsweise handelt es sich bei diesem Fördermittel um eine Pumpe. Die Pumpe kann elektrisch oder mechanisch, vorzugsweise manuell durch den Nutzer betrieben werden. Es ist auch denkbar, das Sprühmittel mittels Druck aus einem Kompressor oder einer Druckkartusche aus dem Behälter zu fördern.

In einer bevorzugten Ausführungsform weist das erfindungsgemäße Sprühgerät eine handbetriebene Pumpe auf, mit der das Sprühmittel aus dem Behälter durch die mindestens eine Düse in Richtung auf das Zielobjekt gefördert werden kann.

Das erfindungsgemäße Sprühgerät umfasst einen Flussmesser zum Bestimmen der Menge des pro Zeiteinheit aus dem Sprühgerät austretenden Sprühmittels. Unter Menge wird je nach verwendetem Messverfahren das Volumen oder die Masse verstanden.

Der Flussmesser ist vorzugsweise ein Durchflussmesser, der in Flussrichtung vor der mindestens einen Düse engabracht ist. Der Durchflussmesser ist beispielsweise ein magnetisch-induktiver Durchflussmesser, ein Schwebekörper-Durchflussmesser, ein Ultraschall-Durchflussmesser, ein Coriolis-Massendurchflussmesser, ein kalorimetrischer Durchflussmesser oder ein Vortex-Durchflussmesser. Denkbar ist aber auch die Verwendung einer Messblende oder eine Staudrucksonde.

In einer bevorzugten Ausführungsform wird die Durchflussmessung mit Hilfe eines Differenzdrucksensors vorgenommen.

Details zur Durchflussmessung können beispielsweise dem folgenden Lehrbuch entnommen werden: K.W. Bonfig: Technische Durchflussmessung, Vulkan-Verlag Essen, 3. Auflage, 2002, ISBN 3-8027-2190-X.

Das erfindungsgemäße Sprühgerät umfasst ferner einen Abstandssensor zur Ermittlung des Sprühabstandes zwischen der mindestens einen Düse und dem Zielobjekt (Düsen-Objekt-Abstand). Er ist bevorzugt in der Nähe der mindestens einen Düse angebracht. Der Abstandssensor arbeitet vorzugsweise berührungslos. Es kann sich bei dem Abstandssensor beispielsweise um einen Laserentfernungsmesser oder einen Ultraschallsensor handeln.

Das erfindungsgemäße System umfasst Mittel zur Bestimmung der Schrittgeschwindigkeit des Nutzers. In einer bevorzugten Ausführungsform werden ein GPS-Sensor und ein Zeitmesser (oder ein ähnliches Positionsbestimmungssystem) verwendet, mit denen der jeweilige Ort des Nutzers erfasst wird und die Zeit ermittelt wird, die vergeht, wenn sich der Nutzer von einem Ort zu einem anderen Ort begibt.

In einer bevorzugten Ausführungsform sind der GPS-Sensor und der Zeitmesser Bestandteile eines mobilen Computersystems, vorzugsweise eines Smartphones oder Tablet Computers. In einem solchen Fall sind die Mittel zur Bestimmung der Schrittgeschwindigkeit des Nutzers kein integraler Bestandteil des Sprühgeräts sondern das Sprühgerät und das mobile Computersystem sind physikalische voneinander getrennte Objekte, die im Sinne der Erfindung zusammenwirken. Neben der Bestimmung der Schrittgeschwindigkeit können weitere Funktionen des Sprühgeräts auf ein separates mobiles Computersystem "ausgelagert" werden. Es ist aber auch denkbar, dass das Computersystem ein integraler Bestandteil des Sprühgeräts ist.

In einer anderen bevorzugten Ausführungsform handelt es sich bei dem Geschwindigkeitsmesser um eine Kombination aus einem Zeitmesser und einem Schrittzähler wie er heute in zahlreichen so genannten Smartwatches, in Smartphones oder in Fitness-Trackern implementiert ist. Nach Bestimmung einer Schrittlänge kann die Schrittgeschwindigkeit durch die folgende Formel ermittelt werden: Anzahl der Schritte multipliziert mit der Schrittlänge dividiert durch die Zeit, die für die Schritte erforderlich war.

Das erfindungsgemäße System umfasst ferner einen oder mehrere Signalgeber. Der mindestens eine Signalgeber kann ein integraler Bestandteil des Sprühgeräts sein; ebenso ist es denkbar, dass der mindestens eine Signalgeber ein Bestandteil des mobilen Computersystems ist; es ist aber auch denkbar, dass mehrere Signalgeber vorhanden sind, von denen mindestens einer ein integraler Bestandteil des Sprühgeräts und mindestens ein anderer ein integraler Bestandteil des mobilen Computersystems ist. Ein Signalgeber kann dazu veranlasst werden, ein oder mehrere Signale abzugeben, das/die den Nutzer auf das Eintreten eines Ereignisses oder auf einen bestimmten Umstand hinweisen soll/sollen. Bei einem Signal kann es sich um ein akustisches Signal handeln, das heißt um einen Ton und/oder ein Geräusch, das vom menschlichen Gehör wahrgenommen werden kann. Bei einem Signal kann es sich aber auch um ein visuelles Signal handeln, zum Beispiel um ein an- oder ausgehendes oder blickendes Licht, das vom menschlichen Auge erfasst werden kann. Bei einem Signal kann es sich aber auch um ein taktiles Signal handeln, wie beispielsweise eine Vibration, die vom menschlichen Körper wahrgenommen kann.

Das erfindungsgemäße Ssystem umfasst ferner eine Computereinheit zur Erfassung und Auswertung der Daten, die während eines Sprühvorgangs anfallen: die Schrittgeschwindigkeit des Nutzers, die Menge des pro Zeiteinheit über die mindestens eine Düse abgegebenen Sprühmittels (Sprühmittelfluss) und der Abstand zwischen der mindestens einen Düse und dem Zielobjekt.

Erfindungsgemäß gilt es, einen möglichst gleichbleibenden und definierten Auftrag des Sprühmittels in dem Zielgebiet auf das oder die Zielobjekte zu gewährleisten; das bedeutet, dass die Auftragsmenge über das gesamte Zielgebiet einen definierten konstanten Wert aufweisen sollte.

Die Auftragsmenge ist die Menge an Sprühmittel, die pro Flächeneinheit aufgebracht wird. Die Menge kann in Volumen oder Masse angegeben werden.

Wird von dem Sprühgerät über die mindestens eine Düse eine konstante Menge an Sprühmittel pro Zeiteinheit abgegeben, so ist die Auftragsmenge davon abhängig, wie schnell sich der Nutzer durch das Zielgebiet bewegt, während er Sprühmittel appliziert. Je schneller er sich bei konstantem Sprühmittelfluss bewegt, desto geringer ist die Auftragsmenge. Ferner ist die Auftragsmenge von der Sprühbreite abhängig. Die Sprühbreite ist die zur Bewegungsrichtung des Nutzers senkrechte Ausdehnung desjenigen Flächenstücks, das von dem Sprühmittel bei einem Sprühvorgang benetzt wird. Je größer die Sprühbreite bei konstantem Sprühmittelfluss ist, desto geringer ist die Auftragsmenge. Die Sprühbreite ist üblicherweise vom Abstand der mindestens einen Düse vom Zielobjekt abhängig. Üblicherweise wird die Sprühbreite mit zunehmendem Abstand größer.

Um eine gleichbleibende und definierte Auftragsmenge zu gewährleisten, werden die Schrittgeschwindigkeit, der Sprühmittelfluss und der Düsen-Objekt-Abstand während des Applikationsvorgangs mittels der Computereinheit erfasst.

Es ist auch denkbar, dass der Nutzer den Düsenkörper quer zur Schrittrichtung bewegen sollte, um das Zielobjekt vollständig besprühen zu können. Es ist zum Beispiel denkbar, dass der Düsenkörper mit der mindestens einen Düse so hergerichtet ist, dass das applizierte Sprühmittel nur eine schmale (quer zur Schrittrichtung) Fläche benetzt. Üblicherweise wird die Sprühbreite durch eine Hin- und Her-Bewegung des Düsenkörpers quer zur Schrittrichtung vergrößert. In einer bevorzugten Ausführungsform verfügt das erfindungsgemäße Sprühgerät über einen Sensor zur Erfassung der Auslenkungsweite des Düsenkörpers quer zur Schrittrichtung des Nutzers bei der Hin- und Her-Bewegung. Ebenso ist es denkbar, dass neben der Auslenkungsweite auch die Pendelfrequenz erfasst wird.

Falls sich die Werte eines oder mehrerer der erfassten Parameter so ändern, dass eine gleichbleibende und definierte Auftragsmenge über das gesamte Zielgebiet nicht mehr gegeben ist, so veranlasst die Computereinheit den mindestens einen Signalgeber dazu, ein Signal abzugeben, so dass der Nutzer darüber informiert ist, dass eine gleichbleibende und definierte Auftragsmenge über das gesamte Zielgebiet nicht mehr gegeben ist. Der Nutzer kann dann sein Verhalten ändern, um wieder eine gleichbleibende und definierte Auftragsmenge über das gesamte Zielgebiet zu erreichen. Dabei bedeutet "gleichbleibende und definierte Auftragsmenge", dass sich die Auftragsmenge innerhalb definierter Schranken (üblicherweise eine Ober- und eine Unterschranke) bewegt.

Es ist zum Beispiel denkbar, dass sich der Nutzer zu langsam oder zu schnell bewegt und die Auftragsmenge zu groß bzw. zu klein ist. Die Computereinheit erkennt durch Vergleich der aktuellen Bewegungsgeschwindigkeit mit einer definierten Bewegungsgeschwindigkeitsunterschranke bzw. einer definierten Bewegungsgeschwindigkeitsoberschranke, dass sich der Nutzer zu langsam bzw. zu schnell bewegt. Die Computereinheit veranlasst mindestens einen Signalgeber dazu, ein Signal abzugeben, um den Nutzer zu einer höheren bzw. zu einer niedrigeren Schrittgeschwindigkeit anzuregen.

Es ist zum Beispiel denkbar, dass der Nutzer den Düsenkörper mit der mindestens einen Düse zu hoch oder zu niedrig hält, so dass der Düsen-Objekt-Abstand zu groß bzw. zu klein ist und die Auftragsmenge dementsprechend zu niedrig bzw. zu hoch ist. Die Computereinheit erkennt durch Vergleich des aktuellen Düsen-Objekt-Abstands mit einer definierten Düsen-Objekt-Abstand-Oberschranke bzw. einer definierten Düsen-Objekt-Abstand-Unterschranke, dass der Nutzer den Düsenkörper zu hoch bzw. zu niedrig hält. Die Computereinheit veranlasst mindestens einen Signalgeber dazu, ein Signal abzugeben, um den Nutzer zu einer niedrigeren bzw. zu einer höheren Düsenkörperhaltung anzuregen.

Im Fall der Verwendung eines manuell steuerbaren Fördermittels zur Förderung des Sprühmittels aus dem Behälter in Richtung Zielobjekt (z.B. bei Verwendung einer handbetriebenen Pumpe) kann es auch sein, dass der Sprühmittelfluss zu gering oder zu hoch ist. Die Computereinheit erkennt durch Vergleich des aktuellen Sprühmittelflusses mit einer definierten Sprühmittelflussunterschranke bzw. einer definierten Sprühmittelflussoberschranke, dass der Sprühmittelfluss zu niedrig bzw. zu hoch ist. Die Computereinheit veranlasst mindestens einen Signalgeber dazu, ein Signal abzugeben, um den Nutzer zur Einstellung eines höheren bzw. niedrigeren Sprühmittelflusses anzuregen.

Es ist zum Beispiel auch denkbar, dass der Nutzer den Düsenkörper bei der Hin- und Her-Bewegung zu weit oder zu kurz auslenkt und die Auftragsmenge zu klein bzw. zu groß ist. Die Computereinheit erkennt durch Vergleich der aktuellen Auslenkungsweite mit einer definierten Auslenkungsoberschranke bzw. einer definierten Auslenkungsunterschranke, dass der Nutzer den Düsenkörper zu weit bzw. zu kurz auslenkt. Die Computereinheit veranlasst mindestens einen Signalgeber dazu, ein Signal abzugeben, um den Nutzer zu einer geringeren bzw. zu einer höheren Auslenkungsweite anzuregen.

Es ist auch denkbar, dass die Computereinheit aus den erfassten Parametern eine Auftragsmenge errechnet und dem Nutzer über einen oder mehrere Signalgeber ein oder mehrere Signale übermittelt, wenn sich die Auftragsmenge unterhalb einer definierten Auftragsmengenuntergrenze und/oder oberhalb einer definierten Auftragsmengenobergrenze befindet. In einem solchen Fall könnte es sein, dass es dem Nutzer überlassen wird, ob er die korrekte Auftragsmenge dadurch erreichen will, dass er seine Geschwindigkeit anpasst, den Düsen-Objekt-Abstand anpasst und/oder den Sprühmittelfluss anpasst.

Es ist zum Beispiel auch denkbar, dass der Nutzer bei einer Hin- und Her-Bewegung des Düsenkörpers den Düsenkörper zu schnell bewegt, so dass das gesprühte Sprühmittel infolge von Trägheitskräften zu weit nach außen geschleudert wird, oder dass der Nutzer bei einer Hin- und Her-Bewegung des Düsenkörpers den Düsenkörper zu langsam bewegt, so dass die Auftragsmenge über dem Zielgebiet ungleichmäßig ist. Die Computereinheit erkennt durch Vergleich der aktuellen Pendelfrequenz mit einer definierten Pendelfrequenzoberschranke bzw. einer definierten Pendelfrequenzunterschranke, dass der Nutzer den Düsenkörper zu schnell bzw. zu langsam hin- und herbewegt. Die Computereinheit veranlasst mindestens einen Signalgeber dazu, ein Signal abzugeben, um den Nutzer zu einer schnelleren bzw. zu einer langsameren Pendelfrequenz anzuregen.

Bei der Computereinheit kann es sich um einen Mikrocontroller oder um ein mobiles Computersystem wie beispielsweise ein Smartphone oder einen Tablet-Computer handeln. Auch eine Kombination von einem oder mehreren Mikrocontrollern zum Beispiel zum Verarbeiten der von einem oder mehreren Sensoren ermittelten Daten mit einem mobilen Computersystem zum Beispiel zur Ansteuerung der Signalgeber ist denkbar.

In einer besonders bevorzugten Ausführungsform wird ein Einplatinencomputer wie beispielsweise ein Raspberry Pi verwendet, um die von dem Abstandssensor und dem Sprühmittelflussmesser generierten Daten zu empfangen und diese an ein mobiles Computersystem (vorzugsweise ein Smartphone oder Tablet-Computer) weiterzuleiten. Das mobile Computersystem verfügt vorzugsweise über einen GPS-Sensor und einen Zeitmesser, mit dem die Schrittgeschwindigkeit des Nutzers ermittelt wird. Das mobile Computersystem empfängt die Sensordaten vom Einplatinencomputer vorzugsweise über Bluetooth, wertet sie zusammen mit der Schrittgeschwindigkeit aus und veranlasst einen oder mehrere Signalgeber, ein oder mehrere Signale zu geben, falls die Auftragsmenge und/oder ein oder mehrere Applikationsparameter außerhalb der definierten Schranken liegen.

Vorzugsweise umfasst das erfindungsgemäße System/Sprühgerät einen Generator zur Erzeugung elektrischer Energie. Vorzugsweise erzeugt der Generator die komplette, für den Gebrauch der elektrisch betriebenen Komponenten des erfindungsgemäßen Systems/Sprühgeräts notwendige, elektrische Energie.

In einer bevorzugten Ausführungsform handelt es sich bei dem Generator um eine oder mehrere Solarzellen, die an oder auf dem Sprühgerät an- oder aufgebracht sind. Vorzugsweise ist die mindestens eine Solarzelle am Behälter angebracht.

In einer weiteren bevorzugten Ausführungsform handelt es sich bei dem Generator um einen Gleichstromgenerator (Dynamo) der von demjenigen Hebel betrieben wird, mit dem auch die bevorzugte handbetriebene Pumpe als Fördermittel für das Sprühmittel betrieben wird. Pumpt der Nutzer manuell Sprühmittel aus dem Behälter in Richtung Zielobjekt, wird gleichzeitig der Gleichstromgenerator angetrieben und es werden die elektrisch betriebenen Komponenten des Sprühgeräts mit elektrischer Energie gespeist.

Denkbar ist auch eine Kombination aus Solarzelle und Gleichstromgenerator. Eine solche Kombination hat den Vorteil, dass bei Sonnenschein ggf. auf den Gleichstromgenerator verzichtet werden kann, während bei bewölktem Himmel und für den Fall, dass die über die Solarzelle erzeugte Energiemenge nicht ausreicht, der Gleichstromgenerator als zusätzliche Energiequelle genutzt werden kann.

Vorzugsweise weist das erfindungsgemäße Sprühgerät einen Speicher für elektrische Energie (Akkumulator) auf, der überschüssige Energie speichern und bei Bedarf an die elektrisch betriebenen Komponenten des erfindungsgemäßen Sprühgeräts abgeben kann.

Vorzugsweise wird das erfindungsgemäße Sprühgerät kalibriert, bevor es eingesetzt wird.

Ein Teil der Kalibrierung kann in der Ermittlung nutzerspezifischer Parameter bestehen. Zur Kalibrierung kann der Nutzer aufgefordert werden, mit dem erfindungsgemäßen Sprühgerät eine definierte Strecke mit möglichst gleichbleibender Geschwindigkeit zurückzulegen, um zu ermitteln, mit welcher Geschwindigkeit sich die Person bewegt. Die Geschwindigkeit kann zum einen von Person zu Person unterschiedlich sein, zum anderen können äußere Umstände wie Bodenbeschaffenheit, Hitze, Kälte, Wind, Gewicht des Sprühgeräts und dergleichen einen Einfluss auf die Geschwindigkeit haben. Ziel dieser Kalibrierung kann es sein, die für den nachfolgenden Applikationsvorgang zu erwartende mittlere Geschwindigkeit des jeweiligen Nutzers in dem jeweiligen Zielgebiet zu ermitteln. Zur Kalibrierung kann der Nutzer ferner aufgefordert werden, mit dem erfindungsgemäßen Sprühgerät eine definierte Strecke zurückzulegen, und dabei den Düsenkörper in einem definierten Abstand beispielsweise über dem Boden zu halten oder zu bewegen. Ziel dieser Kalibrierung kann es sein, den für den nachfolgenden Applikationsvorgang zu erwartenden Düsen-Objekt-Abstand zu ermitteln, die für den nachfolgenden Applikationsvorgang zu erwartende Pendelfrequenz des Düsenkörpers zu ermitteln und/oder die für den nachfolgenden Applikationsvorgang zu erwartende Auslenkungsweite des Düsenkörpers zu ermitteln. Zur Kalibrierung kann der Nutzer ferner aufgefordert werden, eine definierte Strecke zurückzulegen und dabei ein Sprühmittel durch manuelle Pumpbewegungen zu applizieren. Ziel dieser Kalibrierung kann es sein, einen mittleren Sprühmittelfluss, den der Nutzer durch die Pumpbewegungen erzeugt, zu ermitteln.

Sind die nutzerspezifischen bzw. nutzerabhängigen Parameter ermittelt, kann von einer Computereinheit berechnet werden, wie hoch andere Parameter, die die Auftragsmenge bestimmen, eingestellt werden müssen, um eine definierte Auftragsmenge zu gewährleisten. Zum Beispiel kann der Sprühmittelfluss an die nutzerspezifischen Parameter angepasst werden. Es ist aber auch denkbar, dass die Zusammensetzung des Sprühmittels an die nutzerspezifischen Parameter angepasst wird/werden soll. Beispielsweise kann sich aus den ermittelten nutzerspezifischen/nutzerabhängigen Parametern eine optimale Konzentration eines Wirkstoffs in einem Verdünnungsmittel ergeben. In diesem Fall dient die Kalibrierung der Ermittlung des optimalen Verdünnungsgrads eines Wirkstoffs in dem Sprühmittel.

In einer bevorzugten Ausführungsform besteht zumindest ein Teil der Kalibrierung in der Ermittlung der Sprühbreite. Dazu wird der Nutzer aufgefordert eine definierte Strecke mit dem erfindungsgemäßen Sprühgerät zurückzulegen und dabei Sprühmittel auf den Boden zu applizieren. Anschließend wird die Breite der besprühten Fläche (senkrecht zur Schrittrichtung) ausgemessen. Das Ausmessen kann mit Hilfe eines Maßbandes erfolgen; es ist aber auch denkbar, dass der Nutzer mit Hilfe eines Smartphones oder eines Table-Computers oder dergleichen ein Foto von der besprühten Fläche aufnimmt und eine Software das Foto analysiert, um die Breite des besprühten Bereichs zu bestimmen. Es ist denkbar, dass hierzu eine Referenz auf den Boden gelegt wird und neben dem besprühten Bereich auch die Referenz erfasst wird, so dass die Breite des besprühten Bereichs durch Vergleich mit der Referenz quantifiziert werden kann.

## Patentansprüche

1. System umfassend
- einen Behälter zur Aufnahme eines Sprühmittels
- Mittel zum Tragen des Behälters durch einen Nutzer
- mindestens eine Düse zur Applikation des Sprühmittels auf ein Zielobjekt
- Mittel zum Fördern des Sprühmittels aus dem Behälter durch die mindestens eine Düse in Richtung des Zielobjekts
- einen Flussmesser zum Bestimmen des Sprühmittelflusses
- einen Abstandssensor zur Ermittlung des Sprühabstandes zwischen der mindestens einen Düse und dem Zielgebiet
- Mittel zur Bestimmung der Schrittgeschwindigkeit des Nutzers
- einen oder mehrere Signalgeber
- eine Computereinheit zur Erfassung und Auswertung des Sprühmittelflusses, der Schrittgeschwindigkeit und des Sprühabstandes und zur Steuerung eines oder mehrerer Signalgeber, wobei die Computereinheit so konfiguriert ist, dass sie den einen oder die mehreren Signalgeber veranlasst, dem Nutzer ein oder mehrere Signale zu geben, wenn ein oder mehrere Applikationsparameter von vordefinierten Werten abweichen.

2. Tragbares Sprühgerät umfassend
- Mittel zum Tragen des Sprühgeräts durch einen Nutzer
- einen Behälter zur Aufnahme eines Sprühmittels
- mindestens eine Düse zur Applikation des Sprühmittels auf ein Zielobjekt
- Mittel zum Fördern des Sprühmittels aus dem Behälter durch die mindestens eine Düse in Richtung des Zielobjekt
- einen Flussmesser zum Bestimmen des Sprühmittelflusses
- einen Abstandssensor zur Ermittlung des Sprühabstandes zwischen der mindestens einen Düse und dem Zielobjekt
- einen oder mehrere Signalgeber
wobei das Sprühgerät so hergerichtet ist, dass es mit einem mobilen Computersystem in der Weise zusammenwirkt, dass es den Sprühmittelfluss, und den Sprühabstand an das Computersystem übermittelt und das Computersystem den einen oder mehreren Signalgeber veranlasst, dem Nutzer ein oder mehrere Signale zu geben, wenn der Sprühmittelfluss und/oder der Sprühabstand von vordefinierten Werten abweichen.

3. Verfahren zur Applikation eines Sprühmittels auf ein Zielobjekt umfassend die Schritte
- Bewegen eines tragbaren Sprühgeräts enthaltend das Sprühmittel durch ein Zielgebiet durch einen Nutzer, der das Zielgebiet durchschreitet
- Richten mindestens einer Düse auf ein Zielobjekt
- Fördern des Sprühmittels aus dem Sprühgerät durch die mindestens eine Düse auf das Zielobjekt
- Bestimmen des Sprühabstandes zwischen der mindestens einen Düse und dem Zielobjekt
- Bestimmen der Schrittgeschwindigkeit des Nutzers
- Bestimmen des Sprühmittelflusses
- Erzeugen eines oder mehrerer Signale für den Fall, dass ein oder mehrere Applikationsparameter von vordefinierten Werten abweichen.
